# EUROPEAN PATENT APPLICATION

(11) **EP 2 882 196 A1**
(43) Date of publication of application: **10.06.2015**
(21) Application number: 14187171.5
(22) Date of filing: 30.09.2014
(51) Int. Cl.: H04N 21/422, H04N 21/431, G06F 3/0488, G06F 3/0354

(54) **Display Apparatus, Display System Including Display Apparatus, and Methods of Controlling Display Apparatus and Display System**

(30) Priority: 06.12.2013 KR 20130151252
(71) Applicant: Samsung Electronics Co., Ltd, Gyeonggi-do 443-742 (KR)
(72) Inventor: Yoon, Yeo-ri, Chungcheongbuk-do (KR); Kim, Han-soo, Seoul (KR); Lee, Dong-heon, Seoul (KR)
(74) Representative: Taor, Simon Edward William

(57) **Abstract**

A display apparatus including a display, a receiver configured to receive a remote control signal from a remote controller including a touch pad and a protrusion portion formed thereon, and a controller configured to control the display to display a guidance graphic user interface (GUI) configured to guide a control function allocated to the protrusion portion in response to receiving a remote control signal corresponding to a touch of the protrusion portion.

## Description

Apparatuses and methods consistent one or more exemplary embodiments relate to a display apparatus controllable by a remote controller, a display system including the display apparatus, and method of controlling the display apparatus and the display system, and more particularly, to a display apparatus, a display system, and methods of controlling the display apparatus and the display system, for displaying a guidance graphic user interface (GUI) for a control function allocated to a protrusion portion formed on a touch pad of a remote controller.

By virtue of the development of electronic technologies, various types of display apparatuses have been developed. According to user demands, multifunctional devices have been developed. Accordingly, various display apparatuses including a television (TV) are connected to various servers through a network such as the Internet to provide various services.

For example, a conventional TV receives a broadcast signal to allow a user to view broadcast programs, whereas a recent TV provides various interactive services based on the Internet as well as allowing a user to view broadcast programs. Accordingly, a TV viewer may experience various functions such as web surfing, a video on demand (VOD), a social network service (SNS), games, etc. via a TV.

As services obtained via a display apparatus have diversified, various technologies for providing a user interface (UI) to allow a user to easily search for various services have been proposed.

In particular, conventionally, when a display apparatus is manipulated via a remote controller, the remote controller uses only simple buttons. However, recently, a remote controller including a touch pad for various manipulations appropriate for various services has been introduced to provide user convenience.

With regard to a remote controller including a touch pad, various functions may be allocated according to a touch point or drag direction of a user due to the characteristics of the touch pad. Thus, the remote controller may be an element appropriate for diversified services and various types of UI manipulations provided according to the services.

However, with regard to a remote controller including a touch pad unlike a button type remote controller, it is difficult to print numerous operable functions on the touch pad and to guide the functions, and thus, it is inconvenient that a user cannot know manipulation corresponding to a touch from a current display image until the user directly manipulates the touch pad.

One or more exemplary embodiments overcome the above disadvantages and other disadvantages not described above. However, one or more exemplary embodiments are not required to overcome the disadvantages described above, and an exemplary embodiment may not overcome any of the problems described above.

One or more exemplary embodiments provide a display apparatus, a display system, and methods of controlling the display apparatus and the display system, for displaying a guidance graphic user interface (GUI) for a control function allocated to a protrusion portion formed on a touch pad of a remote controller.

According to an aspect of one or more exemplary embodiments, a display apparatus includes a display, a receiver configured to receive a remote control signal from a remote controller including a touch pad and a protrusion portion formed thereon, and a controller configured to control the display to display at least one guidance graphic user interface (GUI) configured to guiding a control function allocated to the protrusion portion in response to upon receiving the remote control signal, wherein the remote control signal corresponds to a touch of the protrusion portion.

The controller may control the display to display the at least one guidance GUI in a display region positioned in a position corresponding to the touched protrusion portion on the touch pad.

The protrusion portion may include a first protrusion portion that is ridge-shaped in a horizontal direction on the touch pad, and the controller may control the display to display a first guidance GUI, from among the at least one guidance GUI, configured to guide a page conversion function which converts an image displayed on the display into a different image on a page basis according to user manipulation of the first protrusion portion in response to the first protrusion portion being touched.

The protrusion portion may include a second protrusion portion that is ridge-shaped in a vertical direction on the touch pad, and the controller may control the display to display a second guidance GUI, from among the at least one guidance GUI, configured to guide a scroll function which scrolls an image displayed on the display according to user manipulation of the second protrusion portion in response to the second protrusion portion being touched.

The controller may control the display to remove the first or the second guidance GUIs in response to the touch of the first protrusion portion or the second protrusion portion being released, respectively, or the user manipulation of the first protrusion portion or the second protrusion portion being input, respectively.

The protrusion may include a button-shaped protrusion, and the controller may control the display to display a third guidance GUI, from among the at least on guidance GUI, configured to guide a control GUI which controls an additional function provided by the display apparatus in response to the protrusion portion being touched.

The controller may control the display to display the control GUI in response to the protrusion portion being retouched while the third guidance GUI is displayed.

According to an aspect of one or more exemplary embodiments, a display system includes a remote controller including a touch pad and a protrusion portion formed thereon, and a display apparatus configured to be controlled according to a remote control signal transmitted from the remote controller, wherein the display apparatus displays a guidance GUI configured to guide a control function allocated to the protrusion portion in response to receiving the remote control signal, wherein the remote control signal corresponds to a touch of the protrusion portion.

The protrusion portion may include at least one from among a ridge-shaped protrusion portion disposed on an edge portion in the touch pad and a button-shaped protrusion portion disposed on one region in the touch pad.

According to an aspect of one or more exemplary embodiments, a method for controlling a display apparatus includes receiving a remote control signal corresponding to a touch of a protrusion portion from a remote controller including a touch pad and the protrusion portion formed thereon, and displaying at least one guidance graphic user interface (GUI) for guiding a control function allocated to a touched protrusion portion.

The displaying may include displaying the guidance GUI in a display region positioned in a position corresponding to the touched protrusion portion on the touch pad.

The protrusion portion may include a first protrusion portion that is ridge-shaped in a horizontal direction on the touch pad, and the displaying may include displaying a first guidance GUI, from among the at least one guidance GUI, for guiding a page conversion function for converting an image displayed on a display into a different image on a page basis according to user manipulation of the first protrusion portion in response to the first protrusion portion being touched.

In addition, the protrusion portion may include a second protrusion portion that is ridge-shaped in a vertical direction on the touch pad, and the displaying may include displaying a second guidance GUI, from among the at least one guidance GUI, for guiding a scroll function for scrolling an image displayed on the display according to user manipulation of the second protrusion portion in response to the second protrusion portion being touched.

The method may further include removing the first or the second guidance GUIs in response to the touch of the first protrusion portion or the second protrusion portion being released, respectively, or the user manipulation of the first protrusion portion or the second protrusion portion being input, respectively.

The protrusion may include a button-shaped protrusion, and the displaying may include displaying a third guidance GUI, from among the at least one guidance GUI, for guiding a control GUI for controlling an additional function provided by the display apparatus in response to the protrusion portion being touched.

The method may further include displaying the control GUI in response to the protrusion portion being retouched while the third guidance GUI is displayed.

According to an aspect of one or more exemplary embodiments, a display apparatus includes a display, a receiver configured to receive a control signal from an input unit, the input unit being configured to receive tactile input on a portion of the input unit and output the control signal based on the tactile input; and a controller configured to, in response to receiving the control signal, control the display to display a guidance graphic user interface (GUI) configured to guide a control function allocated to the portion.

The input unit may be a touch pad or a touch screen.

The controller may control the display to display a plurality of guidance GUIs configured to guide control functions corresponding to respective portions of the input unit in response to receiving respective control signals corresponding to respective tactile inputs of the respective portions of the input unit.

The portion of the input unit may include at least one from among a protruding portion, an indented portion, and a colored portion.

The tactile input may include a sliding motion on the portion of the input unit, the control signal may correspond to the sliding motion on the portion of the input unit, and the controller may control, in response to receiving the control signal corresponding to the sliding motion, the display to display a guidance GUI configured to guide a scroll function which scrolls an image displayed on the display

According to the aforementioned various embodiments of one or more exemplary embodiments, a user may know a controllable function and a manipulation method thereof by manipulating a protrusion portion on a remote controller in an image displayed on the display apparatus, thereby enhancing convenience.

Additional and/or other aspects and advantages of one or more exemplary embodiments will be set forth in part in the description which follows and, in part, will be obvious from the description, or may be learned by practice of one or more exemplary embodiments.

The above and/or other aspects of one or more exemplary embodiments will be more apparent by describing certain exemplary embodiments with reference to the accompanying drawings, in which:
FIG. 1 is a diagram illustrating a display system according to an exemplary embodiment;
FIG. 2 is a block diagram illustrating the structure and operation of a display apparatus according to an exemplary embodiment
FIGS. 3 to 5 are diagrams illustrating various displayed image of a display apparatus according to an exemplary embodiment;
FIG. 6 is a flowchart of a method of controlling a display apparatus according to an exemplary embodiment; and
FIG. 7 is a block diagram illustrating the structure of a display apparatus in according to an exemplary embodiment.

Certain exemplary embodiments will now be described in greater detail with reference to the accompanying drawings.

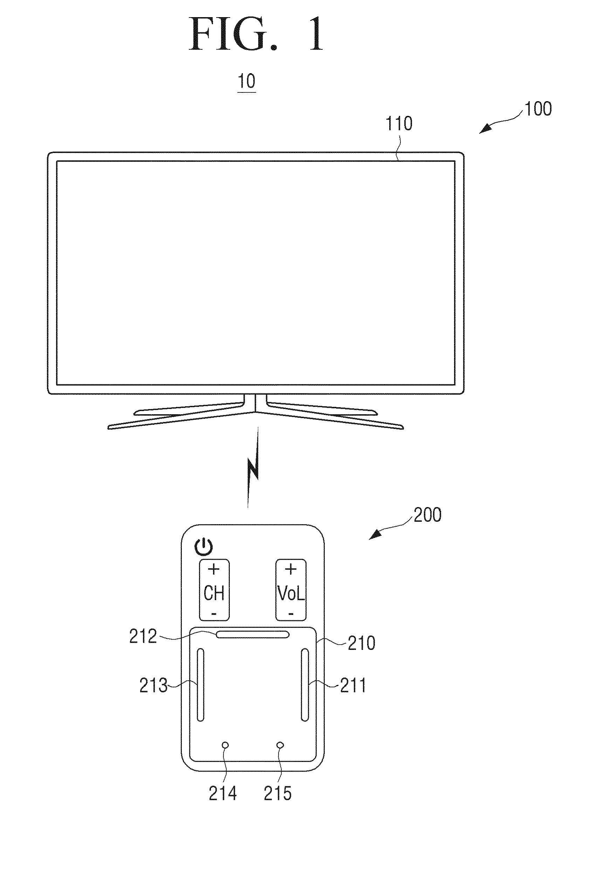

FIG. 1 is a diagram illustrating a display system 10 according to an exemplary embodiment. Referring to FIG. 1, the display system 10 includes a display apparatus 100 and a remote controller 200.

The remote controller 200 transmits a remote control signal to the display apparatus 100 according to user manipulation to control the display apparatus 100.

In detail, the remote controller 200 generates the remote control signal for controlling the display apparatus 100 according to a user manipulation and transmits the remote control signal to the display apparatus 100, and the display apparatus 100 that receives the remote control signal performs an operation corresponding to the received remote control signal. Although a remote controller and a remote control signal is described, this is merely exemplary. For example, a controller may be connected to the display through a wired connection and a control signal may be submitted over the connection, or a user interface included in the display apparatus 100 may submit the control signal.

In particular, the remote controller 200 includes a touch pad 210. The touch pad 210 is formed on an upper surface of the remote controller 200 and receives manipulation according to user touch. Accordingly, when a user touches an upper surface of the touch pad 210, the remote controller 200 outputs the remote control signal corresponding to the user touch, and the display apparatus 100 receives the remote control signal and performs an operation corresponding to the received remote control signal.

Here, various types of user touch may be performed on the touch pad 210, such as, as non-limiting examples, flick, swipe, touch and hold, touch and drag, drag and hold, etc.

Detailed configuration and operation of the touch pad 210 are widely known and thus are omitted below.

In addition, protrusion portions 211 to 215 are formed in one region of the touch pad 210 of the remote controller 200. The protrusion portions 211 to 215 refer to portions that physically protrude on a planar touch pad. In an example shown in FIG. 1, the protrusion portions 211 to 215 include the protrusion portions 211 to 213 shaped like ridge and the protrusion portions 214 and 215 shaped like button.

Here, the ridge shaped portion refers to a portion that longitudinally protrudes like a ridge and extends a predetermined length on the planar touch pad, and the button shaped portion refers to a portion that convexly protrudes like a button.

As seen from the example of FIG. 1, three ridge-shaped protrusion portions 211 to 213 are arranged at upper, left, and right edge portions on the touch pad 210, respectively, and the two button-shaped protrusion portions 214 and 215 are arranged at a lower end portion of the touch pad 210.

However, the arrangement or number of protrusions on the touch pad 210 are purely exemplary and embodiments of the invention are thus is not limited thereto. For example, only two ridge-shaped protrusion portions may be arranged at upper and right edge portions on the touch pad 210 and one button-shaped protrusion portions may be further arranged in the middle of the touch pad 210. Further, although protruding portions 211 to 215 are described in FIG. 1, this is only an example, and portions in one or more exemplary embodiments may distinguishable by other means, such as, as non-limiting examples, indention and coloration. Further, the protruding portions 211 to 215 may not be distinguishable by visual or tactile means; rather portions of one or more exemplary embodiments may merely be regions of the touchpad 210 associated with different functionality, either alone or in combination. Further, the touch pad 210 as shown in FIG. 1 may be, as a non-limiting example, a touch screen. In this case, the portions may be context sensitive graphics displayed on the touch screen. Further, a touch pad 210 and touch screen are merely examples of input units which may be used to send a control signal.

The protrusion portions 211 to 215 are also arranged on the touch pad 210 of the remote controller 200 and thus may receive manipulation according to user touch. User touch manipulation may be performed in various ways, as described above.

Accordingly, when the user touches the protrusion portions 211 to 215, the remote controller 200 may transmit a remote control signal corresponding to the touch of a protrusion portion to the display apparatus 100, and the display apparatus 100 that receives the remote control signal may perform a control operation corresponding thereto.

The display apparatus 100 processes images input from various sources and displays the images on a display 110. In particular, the display apparatus 100 may perform a control operation according to the remote control signal received from the external remote controller 200.

In detail, the display apparatus 100 may display a graphic user interface (GUI) for guidance of a control function allocated to a touched protrusion portion according to the remote control signal corresponding to the touch on the protrusion portions 211 to 215 formed on the touch pad 210 of the remote controller 200.

That is, when a user touches the protrusion portions 211 to 215 on the remote controller 200, the remote controller 200 may transmit the remote control signal corresponding to the touch on the protrusion portion to the display apparatus 100, and the display apparatus 100 may receive the remote control signal corresponding to the touch on the protrusion portion and may display a guidance GUI for guidance of a control function for the display apparatus 100, which is allocated to the touched protrusion portion of the remote controller 200.

To this end, the display apparatus 100 may be embodied as a television (TV), a monitor, a projection, a notebook computer, etc., but embodiments of the invention are not limited thereto. That is, the display apparatus 100 may be any display apparatus as long as the apparatus may be controlled according to a signal of the remote controller 200.

A remote control signal in the aforementioned display system 10 is an infrared ray (IR) signal but embodiments of the invention are not limited thereto. That is, the remote controller 200 and the display apparatus 100 may transmit and receive the remote control signal via various communication methods. As a non-limiting example, the remote control signal may be a Bluetooth signal. In this case, the display apparatus 100 may receive the Bluetooth signal.

A type of a signal of the remote controller 200 for controlling the display apparatus 100 via the remote controller 200 and a communication scheme of the remote controller 200 and the display apparatus 100 according to the signal are not related to the main idea of one or more exemplary embodiments and thus a detailed description thereof is omitted herein.

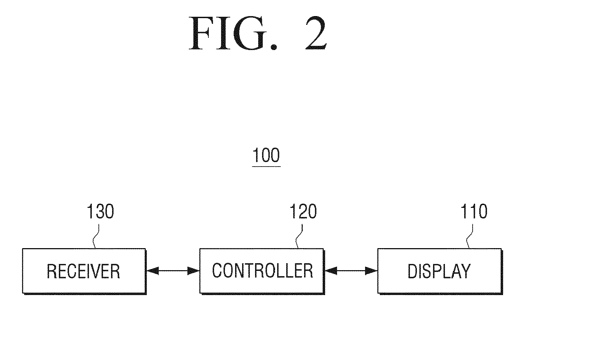

FIG. 2 is a block diagram illustrating the structure and operation of the display apparatus 100 according to an exemplary embodiment. Referring to FIG. 2, the display apparatus 100 includes the display 110, a controller 120, and a receiver 130.

The receiver 130 receives a remote control signal from the remote controller 200. In particular, the receiver 130 may receive the remote control signal corresponding to a touch on the protrusion portions 211 to 215 from the remote controller 200 including the touch pad 210 and the protrusion portions 211 to 215 formed thereon. Although the receiver is described as receiving a remote control signal from an external remote controller, this is merely exemplary. For example, the receiver may receive a control signal from a connected external controller, or from a user interface (not shown) included in the display apparatus 700.

That is, in the example shown in FIG. 1, when a user touches any one of the five protrusion portions 211 to 215 formed on the touch pad 210 of the remote controller 200, the remote controller 200 transmits a remote control signal corresponding to a touched protrusion portion to the display apparatus 100, and the receiver 130 receives the transmitted remote control signal and provides the remote control signal to the controller 120.

The receiver 130 may be appropriately configured and arranged according to communication schemes of the remote controller 200 and the display apparatus 100 in order to receive the remote control signal.

For example, when the remote controller 200 is configured to transmit an IR signal, the receiver 130 may be an IR signal receiver and may be disposed on a front surface of the display apparatus 100, that is, on the same surface as a surface on which the display 110 is disposed.

When the remote controller 200 is configured to transmit a signal of the remote controller 200 via a wireless communication such as a Bluetooth scheme, the receiver 130 may be a Bluetooth signal receiver and may be included within the display apparatus 100.

The display 110 displays various images via control of the controller 120. In detail, the display 110 may display an image signal input from various sources, for example, a broadcast signal received through an antenna or a cable, an image signal input through reproduction of a recording medium such as a digital versatile disc (DVD), and an image signal such as a web page input via a network according to control of the controller 120.

In addition, the display 110 may display a GUI for manipulating the display apparatus 100 according to control of the controller 120. In particular, the display 110 may display a guidance GUI for guidance of a control function allocated to a protrusion portion touched by a user according to control of the controller 120.

The display 110 may be embodied as a liquid crystal display (LCD) panel, an organic light emitting diode (OLED), a plasma display panel (PDP), etc. but embodiments of the invention are not limited thereto.

The controller 120 controls an overall operation of the display apparatus 100. In particular, the controller 120 may control an overall operation of the display apparatus 100 according to a user command input through the remote controller 200.

In detail, when a remote control signal is transmitted to the controller 120 according to the user manipulation, the controller 120 may control the receiver 130 to receive the remote control signal and control the display apparatus 100 according to the received remote control signal.

In particular, upon receiving a remote control signal corresponding to touch of a protrusion portion from a remote controller including a touch pad and the protrusion portion formed thereon, the controller 120 may display a guidance GUI for guidance of a control function allocated to the touched protrusion portion on the display 110.

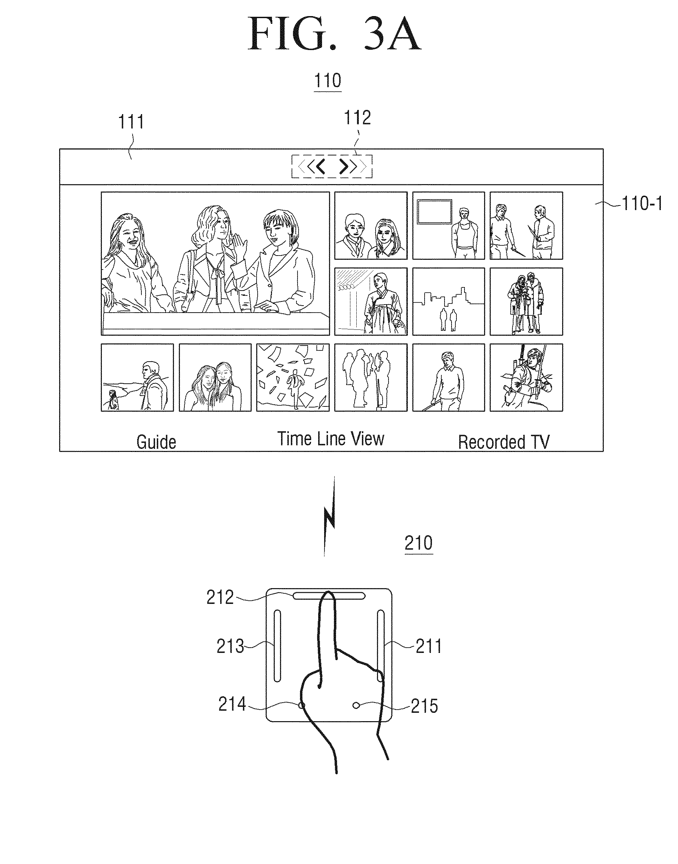

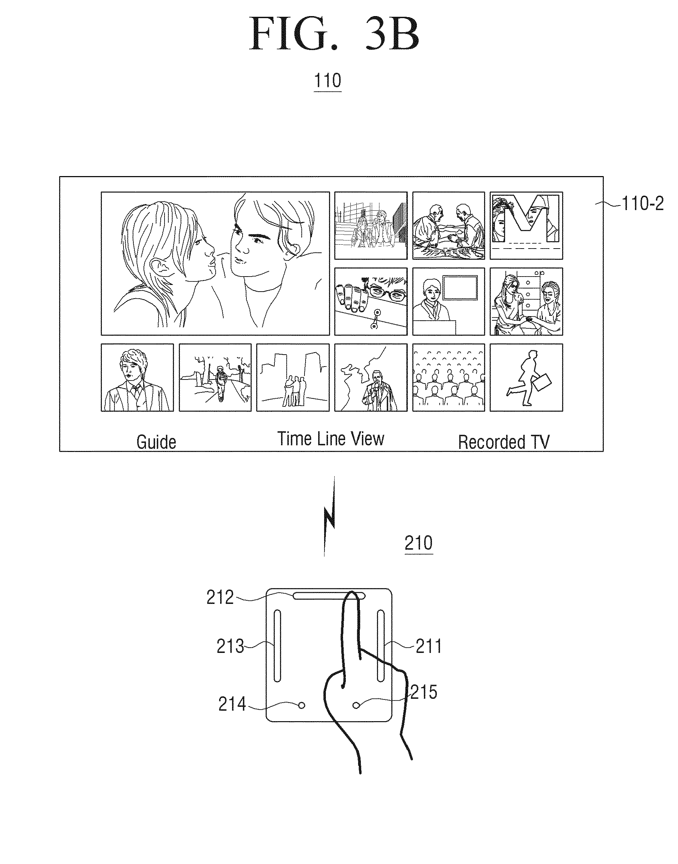

Hereinafter, an operation for controlling the display apparatus 100 by the controller 120 according to touch on the protrusion portions 211 to 215 formed on the touch pad 210 of the remote controller 200 will be described in more detail with reference to FIGS. 3 through 5.

A control function allocated to a protrusion portion and a guidance GUI for guiding the control function will be described with reference to FIGS. 3 to 5.

FIGS. 3A and 3B illustrate an example of an operation for controlling the display 110 of the display apparatus 100 by the controller 120 when the ridge-shaped protrusion portion 212 disposed in a horizontal direction among the five protrusion portions 211 to 215 formed on the touch pad 210 of the remote controller 200 is touched.

In detail, FIG. 3A illustrates an example in which a guidance GUI 112 for guidance of a control function for the display apparatus 100, allocated to the horizontal ridge-shaped protrusion portion 212, is displayed on the display 110 of the display apparatus 100 when the horizontal ridge-shaped protrusion portion 212 is touched on the touch pad 210 of the remote controller 200.

In addition, FIG. 3B illustrates an example in which a service page image 110-1 displayed on the display 110 of FIG. 3A is converted into a service page 110-2 displayed on the display 110 of FIG. 3B and the service page image 110-2 is displayed when a user performs a drag manipulation on the horizontal ridge-shaped protrusion portion 212 on the touch pad 210 in a right direction while touching the horizontal ridge-shaped protrusion portion 212.

In the example of FIGS. 3A and 3B, a page conversion function is allocated to the horizontal ridge-shaped protrusion portion 212. Here, the page conversion function refers to a function for converting an image displayed on the display 110 of the display apparatus 100 into another image on a page basis.

For example, when the display apparatus 100 is a smart TV, a service having a plurality of pages may be provided to the smart TV. In this case, the page conversion function may correspond to a function for controlling the smart TV to convert one service page image that is currently displayed on a screen into a previous or next service page image and to display the previous or next service page image.

Accordingly, when a user views a service that requires page conversion, that is, a service image having a plurality of pages, the user may view a service image of another page via manipulation of the horizontal ridge-shaped protrusion portion 212 formed on the touch pad 210 of the remote controller 200 while viewing any one page image.

In detail, while one service page image 110-1 is displayed on a screen of the display 110 in FIG. 3A, the user manipulates the horizontal ridge-shaped protrusion portion 212 for page conversion, and then, the service page image 110-1 may be converted to another service page image 110-2 and the service page image 110-2 may be displayed like on the display 110 of FIG. 3B.

Here, user touch manipulation of the horizontal ridge-shaped protrusion portion 212 for page conversion is different from touch manipulation for displaying a guidance GUI that will be described below. FIGS. 3A and 3B illustrate an example in which the protrusion portion 212 is dragged in a right direction while being touched.

The user touch manipulation of the horizontal ridge-shaped protrusion portion 212 for page conversion, illustrated in FIGS. 3A and 3B, will now be described in more detail. Through manipulation for dragging the protrusion portion 212 in a left or right direction while touching the protrusion portion 212, a service page displayed on the display 110 is converted into a previous or next service page from one currently displayed service page.

However, this is purely exemplary. That is, the user touch manipulation for the page conversion function may be matched with other touch manipulation different from touch manipulation for displaying a guidance GUI. The user touch manipulation for the page conversion is not related to the main idea of one or more exemplary embodiments and thus a detailed description thereof is omitted herein.

Likewise, since the page conversion function is allocated to the horizontal ridge-shaped protrusion portion 212 on the touch pad 210, when the user touches the horizontal ridge-shaped protrusion portion 212, the user manipulates the touched protrusion portion 212 to display the guidance GUI for guiding conversion into another page image from an image that is currently displayed on a display apparatus.

That is, in the example of FIG. 3A, when the horizontal ridge-shaped protrusion portion 212 formed on the touch pad 210 is touched, the controller 120 displays the guidance GUI 112 for guiding the page conversion function allocated to the touched horizontal ridge-shaped protrusion portion 212.

Here, the user touch manipulation for displaying the guidance GUI 112 is different from the aforementioned touch manipulation for page conversion, and for example, may be manipulation for maintaining a state in which the user touches the horizontal ridge-shaped protrusion portion 212. That is, in the example of FIG. 3, when the user touches the horizontal ridge-shaped protrusion portion 212, the guidance GUI 112 is displayed. In this case, the page conversion function may be executed only when the horizontal ridge-shaped protrusion portion 212 is dragged in a left or right direction while being touched.

In addition, the guidance GUI for guiding the page conversion function may include an element for current execution of the page conversion function and an element indicating a manipulation direction for the page conversion manipulation of the user on an image of the display 110.

In the example of FIG. 3A, the guidance GUI 112 indicates that user manipulation of the protrusion portion 212 in a left or right direction is possible through left and right clamp marks. In addition, although not clearly illustrated in drawings, the guidance GUI 112 may indicate that manipulation of the horizontal ridge-shaped protrusion portion 212 for conversion of a page on a current image is possible through blinking, highlighting, or the like.

However, the guidance GUI 112 illustrated in FIG. 3A is purely exemplary. That is, the guidance GUI 112 may be configured in various ways to guide a manipulation direction and current manipulation. For example, left and right direction arrows may blink at left and right edge portions of a middle portion of an image to indicate that page conversion is possible on a current display image and a manipulation direction is a left or right direction.

The controller 120 may determine whether execution of the page conversion function is possible on an image that is currently displayed on the display 110. For example, the controller 120 may determine whether the currently displayed image is an image corresponding to one of a plurality of pages and determine whether page conversion manipulation is possible on the current display image.

Thus, if the user touches the horizontal ridge-shaped protrusion portion 212 when the currently displayed image is an image corresponding to one of a plurality of service pages, that is, an image to be converted into another page, the controller 120 may display a guidance GUI for the page conversion function.

If the currently displayed image is an image that is not capable of being converted, when the horizontal ridge-shaped protrusion portion 212 is touched, a guidance GUI for the page conversion function is not displayed. However, this is purely exemplary. If the currently displayed image is an image that is not capable of being converted, when the horizontal ridge-shaped protrusion portion 212 is touched,, an image indicating that the page conversion function is not possible may be displayed.

When the user touch on the horizontal ridge-shaped protrusion portion 212 is released or user manipulation for page conversion is input to the controller 120, the controller 120 may remove the displayed guidance GUI.

In FIG. 3A, the guidance GUI 112 displayed on the display 110 according to the user touch on the horizontal ridge-shaped protrusion portion 212 is removed when the user releases the touch, that is, takes his or her hand off the horizontal ridge-shaped protrusion portion 212.

In addition, as illustrated in FIG. 3A, while touching the horizontal ridge-shaped protrusion portion 212, when the user drags the horizontal ridge-shaped protrusion portion 212 in a right direction to execute the page conversion function allocated to the horizontal ridge-shaped protrusion portion 212, the guidance GUI is removed while the page conversion function is executed as shown in the image of the display 110 of FIG. 3B.

Through this, the user may know a manipulation direction and whether manipulation of currently touched protrusion portion is possible while minimizing a distraction of seeing a currently displayed image.

According to another exemplary embodiment, the controller 120 may control the display 110 to display the guidance GUI on a region of the display 110, which corresponds to a position of the touched protrusion portion on the touch pad 210.

That is, as seen from the example of FIG. 3A, the guidance GUI 112 is displayed in a region of the display 110, which corresponds to an upper edge portion as a position of the horizontal ridge-shaped protrusion portion 212 on the touch pad 210, that is, in an upper edge portion of the display 110.

Through this, the user may expect that the guidance GUI is to be displayed in a region corresponding to a position of a protrusion portion touched by the user on the touch pad 210, thereby achieving manipulating convenience.

Through the aforementioned operation of the controller 120 for displaying the guidance GUI corresponding to the touch of the horizontal ridge-shaped protrusion portion 212, the user may know whether a page conversion function is executed, a position of a protrusion portion for page conversion on a remote controller, and a manipulation direction of the protrusion portion from a current display image, thereby enhancing convenience.

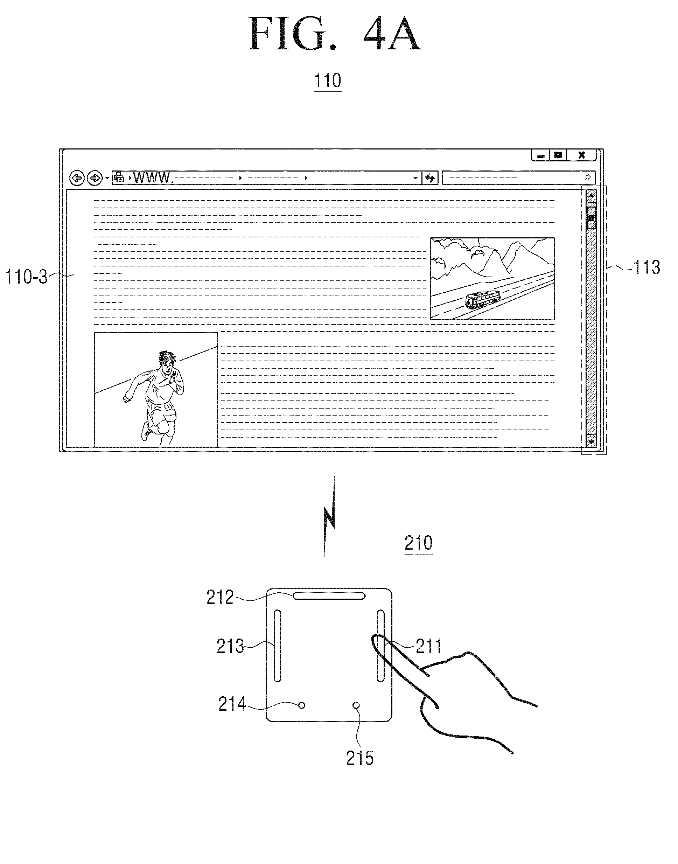

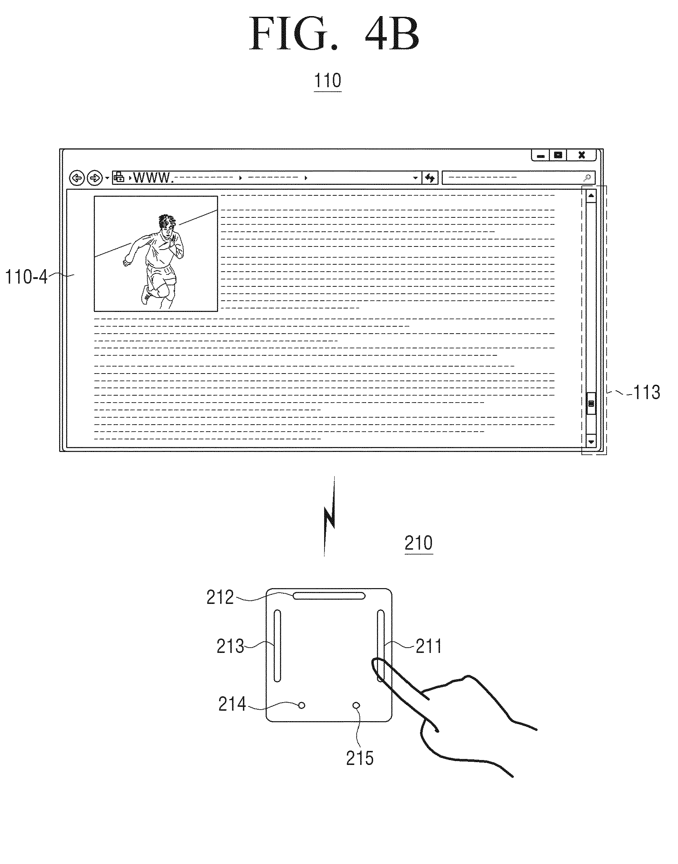

FIGS. 4A and 4B illustrate an example of an operation for controlling the display 110 of the display apparatus 100 by the controller 120 when the ridge-shaped protrusion portion 211 disposed in a vertical direction at a right edge portion among the five protrusion portions 211 to 215 formed on the touch pad 210 of the remote controller 200 is touched according to an exemplary embodiment.

In detail, FIG. 4A illustrates an example in which a guidance GUI 113 for guidance of a control function for the display apparatus 100, allocated to the vertical ridge-shaped protrusion portion 211, is displayed on the display 110 of the display apparatus 100 when the vertical ridge-shaped protrusion portion 211 is touched on the touch pad 210 of the remote controller 200.

In addition, FIG. 4B illustrates an example in which a web page image that has been displayed on the display 110 of FIG. 4A is scrolled in an upward direction when the user performs a drag motion on the vertical ridge-shaped protrusion portion 211 on the touch pad 210 while touching the vertical ridge-shaped protrusion portion 211.

In the example of FIGS. 4A and 4B, a scroll function is allocated to the vertical ridge-shaped protrusion portion 211. Here, the scroll function refers to a function for scrolling an image displayed on the display 110 of the display apparatus 100.

For example, when the display apparatus 100 is a smart TV, since the smart TV provides an Internet service, a web page may be displayed on a display screen of the smart TV. In this case, a web page image displayed on the smart TV may be scrolled in an upward or downward direction via user manipulation like scrolling using a keyboard or a mouse.

Accordingly, when the user sees an image required to be scrolled in an upward or downward direction, the user may scroll the image via manipulation of the vertical ridge-shaped protrusion portion 211 formed on the touch pad 210 of the remote controller and see the image.

In detail, it may be seen that, when a partial image 110-3 of the web page is displayed on a screen of the display 110 in FIG. 4A, after the user manipulates the vertical ridge-shaped protrusion portion 211 for scrolling the partial image 110-3, a web page image 110-4 scrolled in the upward direction may be displayed as in the screen of the display 110 of FIG. 4B.

Here, user touch manipulation of the vertical ridge-shaped protrusion portion 211 for scrolling an image of the display 110 is different from touch manipulation for displaying a guidance GUI that will be described below. FIGS. 4A and 4B illustrates an example in which the protrusion portion 211 is dragged in a downward direction while being touched.

The user touch manipulation of the vertical ridge-shaped protrusion portion 211 for the scroll function, illustrated in FIGS. 4A and 4B, will now be described in more detail. Through manipulation for dragging the protrusion portion 211 in an upward or downward direction while touching the protrusion portion 211, a web page image displayed on the display 110 is scrolled.

However, this is purely exemplary. That is, the user touch manipulation for the scroll function may be matched with other touch manipulation different from touch manipulation for displaying a guidance GUI. The user touch manipulation for the scroll function is not related to the main idea of one or more exemplary embodiments and thus a detailed description thereof is omitted herein.

Likewise, since the scroll function is allocated to the vertical ridge-shaped protrusion portion 211 on the touch pad 210, when the user touches the vertical ridge-shaped protrusion portion 211, the user manipulates the touched protrusion portion 211 to display the guidance GUI for guiding the scroll function for scrolling and seeing an image currently displayed on a display apparatus.

That is, in the example of FIG. 4A, when the vertical ridge-shaped protrusion portion 211 formed on the touch pad 210 is touched, the controller 120 displays the guidance GUI 113 for guiding the scroll function allocated to the touched vertical ridge-shaped protrusion portion 211.

Here, the user touch manipulation for displaying the guidance GUI 113 is different from the aforementioned touch manipulation for scrolling of a display screen, and for example, may be manipulation for maintaining a state in which the user touches the vertical ridge-shaped protrusion portion 211.

That is, in the example of FIGS. 4A and 4B, when the user touches the vertical ridge-shaped protrusion portion 211, the guidance GUI 113 is displayed. In this case, the scroll function may be executed only when the vertical ridge-shaped protrusion portion 211 is dragged in an upward or downward direction while being touched.

In addition, the guidance GUI for guiding the scroll function may include an element for current execution of the scroll function through manipulation of the vertical ridge-shaped protrusion portion 211 and an element indicating a manipulation direction for the scroll manipulation of the user on an image of the display 110.

In the example of FIG. 4A, the guidance GUI 113 for guiding the scroll function is displayed and highlighted indicating that execution of the scroll function on the currently displayed web page image 110-3 is possible, on a scroll bar of a web page.

This is because since a scrollable web page includes a scroll bar, a user may know a scroll manipulation direction even if the scroll manipulation direction is not separately indicated. Thus, the guidance GUI 113 is only highlighted indicating that scroll of the image of the display 110 is possible through manipulation of the currently touched vertical ridge-shaped protrusion portion 211 may be indicated.

However, this is purely exemplary. That is, the guidance GUI 113 may be displayed in various forms irrespective of the scroll bar indication provided on a web page. For example, when the user touches the vertical ridge-shaped protrusion portion 211, the guidance GUI 113 may be displayed separately from a scroll bar contained in a window in which a web page is displayed.

In addition, a position and shape for displaying the guidance GUI in embodiments of the invention are not limited to the aforementioned example. As a non-limiting example, upward and downward direction marks indicated by arrows at upper and lower portions of a right edge portion may indicate that the user manipulation of the protrusion portion 211 in an upward or downward direction is possible. In addition, blinking or highlighting may be used on the marks to indicate that scroll manipulation is possible on a current display screen. As another example, upward and downward clamp marks may be used at upper and lower edge portions of a middle portion of an image and may blink to indicate that manipulation of the currently touched vertical ridge-shaped protrusion portion 211 in an upward or downward direction is possible.

The controller 120 may determine whether scroll manipulation on an image currently displayed on the display 110 is possible. For example, sizes of images of the display 110 or the sizes of windows displayed on the display 110 and the amounts of contents displayed on the windows may be compared to determine whether the scroll manipulation is possible.

Accordingly, the controller 120 may display the guidance GUI for guiding the scroll function only when a currently displayed image is scrollable.

When user touch on the vertical ridge-shaped protrusion portion 211 or user manipulation for scrolling a display image is input to the controller 120, the controller 120 may remove the displayed guidance GUI.

In FIG. 4A, the guidance GUI 113 displayed on the display 110 according to the user touch on the vertical ridge-shaped protrusion portion 211 is removed when the user releases the touch, that is, takes his or her hand off the vertical ridge-shaped protrusion portion 211.

In addition, as illustrated in FIG. 4A, while touching the vertical ridge-shaped protrusion portion 211, when the user drags the vertical ridge-shaped protrusion portion 211 in a downward direction to execute the scroll function allocated to the vertical ridge-shaped protrusion portion 211, the guidance GUI is deleted while the scroll function is executed like in an image 110-4 of the display 110 of FIG. 4B.

Through this, the user may know a manipulation direction and whether manipulation of currently touched protrusion portion is possible while minimizing influence on an operation of seeing a currently displayed image.

According to another exemplary embodiment, the controller 120 may control the display 110 to display the guidance GUI on a region of the display 110, which corresponds to a position of the touched protrusion portion on the touch pad 210.

That is, as seen from the example of FIG. 4A, the guidance GUI 113 is displayed in a region of the display 110, which corresponds to a right edge portion as a position of the vertical ridge-shaped protrusion portion 211 on the touch pad 210, that is, in a right edge portion of the display 110.

Through this, the user may expect that the guidance GUI is to be displayed in a region corresponding to a position of a protrusion portion touched by the user on the touch pad 210, thereby achieving manipulating convenience.

Thus far, with reference to FIGS. 4A and 4B, an exemplary embodiment in which the guidance GUI 113 for the scroll function allocated to the right protrusion portion 211 among the vertical ridge-shaped protrusion portions 211 and 213 formed on the touch pad 210 of the remote controller 200 is displayed on the display 110 has been described.

In the meantime, the scroll function may also be allocated to the left protrusion portion 213 among the vertical ridge-shaped protrusion portions 211 and 213 formed on the touch pad 210 of the remote controller 200. Accordingly, when the protrusion portion 213 is touched, a guidance GUI for guiding the scroll function allocated to the touched protrusion portion 213 may be displayed on the display 110.

However, in this case, the guidance GUI may be displayed at a region of the display 110, which corresponds to a left edge portion as a position of the touched protrusion portion 213 on the touch pad 210, that is, a left edge portion of the display 110.

However, this is purely exemplary. That is, different functions may be allocated to the two vertical ridge-shaped protrusion portions 211 and 213 and different guidance GUIs for guiding control functions for the display apparatus 100, allocated to the respective guidance GUIs, may be displayed according to user touch.

Through the aforementioned operation of the controller 120 for displaying the guidance GUI 113 corresponding to the touch of the vertical ridge-shaped protrusion portion 211, the user may know whether a scroll function is executed, a position of a protrusion portion for scroll of an image, and a manipulation direction of the protrusion portion from a current display image, thereby enhancing convenience.

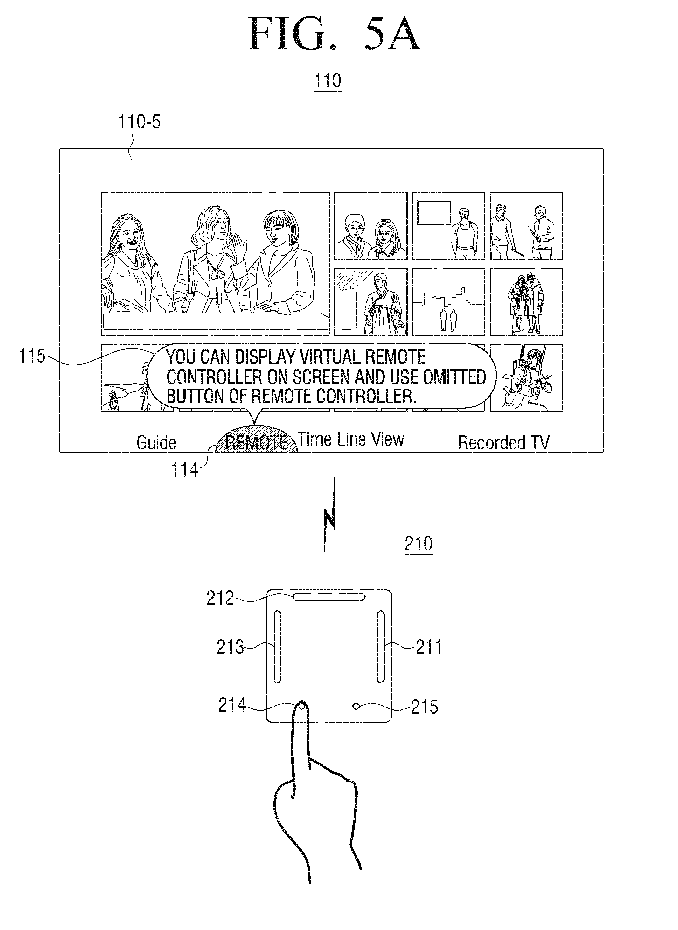

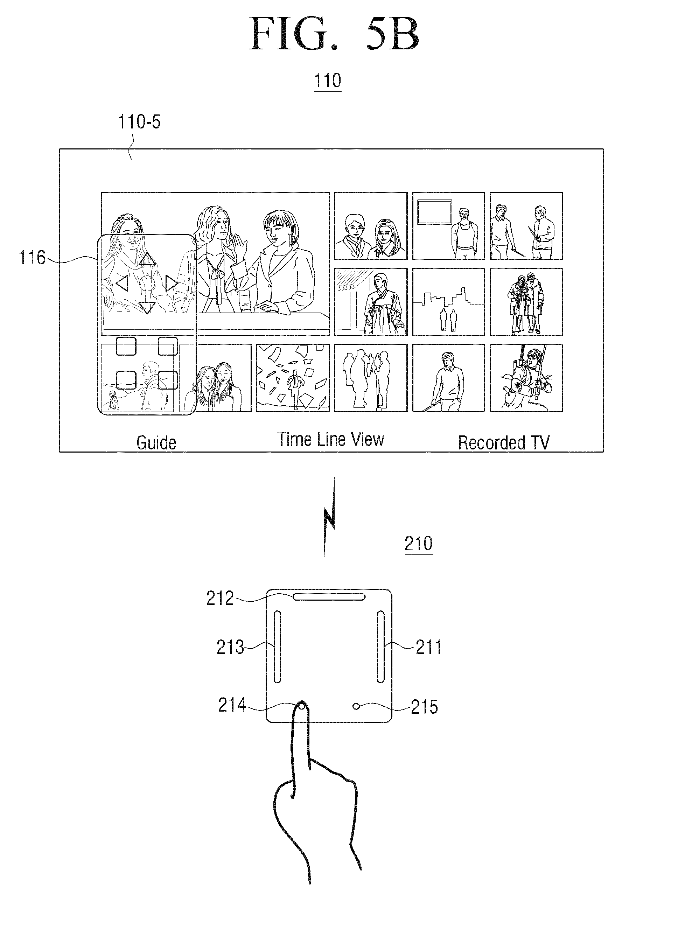

FIGS. 5A and 5B illustrates an operation for controlling the display 110 of the display apparatus 100 by the controller 120 when the button-shaped protrusion portion 214 disposed at a lower-left edge portion among the button-shaped protrusion portions 214 and 215 of the five protrusion portions 211 to 215 formed on the touch pad 210 of the remote controller 200 is touched according to an exemplary embodiment.

When a button-shaped protrusion portion is touched, the controller 120 may display a guidance GUI for guiding a control GUI for controlling an additional function to be provided by the display apparatus 100. In addition, while the guidance GUI for the control GUI is displayed, when the button-shaped protrusion portion is retouched, the controller 120 may display the control GUI on the display 110.

Here, the control GUI is a GUI displayed on the display 110 for controlling the additional function to be provided by the display apparatus 100 according to user manipulation.

For example, when the display apparatus 100 is a smart TV, it may not be appropriate in terms of convenience for user manipulation to manipulate numerous services provided to the smart TV through a remote controller. Accordingly, only a main function among functions provided to a display apparatus may be manipulated through the remote controller, and a separate virtual remote controller may be displayed on the display apparatus 100 to manipulate an additional function so as to use additional functions omitted in the remote controller.

In this case, the virtual remote controller may be an example of the control GUI for controlling the additional function. However, this is purely exemplary. That is, the control GUI for controlling the additional function may be configured in various ways.

In addition, a main function executable via manipulation of a remote controller and an additional function executable via manipulation of a virtual remote controller may be designed according to determination of a producer of the remote controller or a display apparatus.

User touch manipulation for displaying the control GUI is different from touch manipulation for displaying the guidance GUI for the control GUI. For example, the touch manipulation for displaying the guidance GUI may be a first touch operation for a button-shaped protrusion portion and the touch manipulation for displaying the control GUI may be an operation for retouching the button-shaped protrusion portion while the guidance GUI is displayed.

However, this is purely exemplary. That is, the touch manipulation for displaying the guidance GUI and the touch manipulation for displaying the control GUI may be matched in various methods so as to be differentiated from each other.

Hereinafter, an operation of the controller 120 with respect to a button-shaped protrusion portion will be described in detail referring back to the example of FIG. 5.

Referring to FIG. 5A, while a random image 110-5 is displayed on the display 110 of the display apparatus 100, when a user touches the button-shaped protrusion portion 214 of the touch pad 210 of the remote controller 200, the controller 120 displays guidance GUIs 114 and 115 for guiding a function for execution of a virtual remote controller allocated to the button-shaped protrusion portion 214 on the display 110 of the display apparatus 100.

In this case, even if the user releases the touch on the button-shaped protrusion portion 214, the guidance GUIs 114 and 115 are not removed. Accordingly, while the guidance GUIs 114 and 115 are displayed, when the user retouches the button-shaped protrusion portion 214 on the touch pad 210 as illustrated in FIG. 5B, the controller 120 may execute a function of a virtual remote controller 116 and display the function on the display 110. As illustrated in FIG. 5B, when the virtual remote controller 116 is executed and displayed, the controller 120 removes the guidance GUIs 114 and 115.

Here, as seen from the display 110 of FIG. 5A, the guidance GUIs 114 and 115 for guiding a virtual remote controller includes guidance GUI 114 indicating that execution of the virtual remote controller is possible on a currently displayed image and guidance GUI 115 providing an explanation thereof. However, this is purely exemplary. That is, a guidance GUI indicating that execution of the virtual remote controller is possible may be configured in other ways via manipulation of the button-shaped protrusion portion 214.

The controller 120 may determine whether a currently displayed image is an image for displaying a control GUI to control an additional function. Thus, the controller 120 may display a guidance GUI only when the guidance GUI is displayed on the currently displayed image to control the additional function.

According to an exemplary embodiment, the controller 120 may control the display 110 the guidance GUI in a region of the display 110, which corresponds to a position of the touched protrusion portion of the touch pad 210.

That is, as seen from the example of FIG. 5A, the guidance GUIs 114 and 115 may be displayed in a region of the display 110, which corresponds to a lower-left edge portion as a position of the button-shaped protrusion portion 214 on the touch pad 210, that is, in a lower-left edge portion of the display 110.

Through this, the user may expect that the guidance GUI is to be displayed in a region corresponding to a position of a protrusion portion touched by the user on the touch pad 210, thereby achieving manipulating convenience.

Thus far, with reference to FIGS. 5A and 5B, the example in which a function for execution and display of a virtual remote controller is allocated to the left protrusion portion 214 of the button-shaped protrusion portions 214 and 215 formed on the touch pad 210 of the remote controller 200 and a guidance GUI for the virtual remote controller and the virtual remote controller are displayed according to user manipulation of the protrusion portion 214 has been described.

In the meantime, the function for execution and display of a control GUI for controlling an additional function provided by a display apparatus such as a virtual remote controller may also be allocated to the right protrusion portion 215 of the button-shaped protrusion portions 214 and 215 formed on the touch pad 210 of the remote controller 200. Thus, when the protrusion portion 215 is touched, the guidance GUI for guiding the function for execution and display of the control GUI allocated to the touched protrusion portion 215 may be displayed on the display 110.

However, in this case, the guidance GUI may be displayed a region of the display 110, which corresponds to a position of the touched protrusion portion 215 on the touch pad 210, that is, in a lower-right edge portion of the display 110.

However, this is purely exemplary. That is, functions for execution and display of control GUIs for controlling different additional functions may be allocated to the two button-shaped protrusion portions 214 and 215 and different types of guidance GUIs for the control GUIs for the allocated additional functions may be displayed according to user touch.

Through the aforementioned operation of the controller 120 for displaying the guidance GUIs 114 and 115 corresponding to the touch of the button-shaped protrusion portion 214, the user may know whether a control GUI is executed and displayed on a current display image, and a position of a protrusion portion for execution and display of the control GUI on a remote controller, thereby enhancing convenience.

The protrusion portions 211 to 215 formed on the touch pad 210 of the remote controller 200 and the control functions allocated thereto, which have been described with reference to FIGS. 3 through 5, are purely exemplary, and other different functions for manipulation through various protrusion portions may be allocated according to a service type provided to the display apparatus 100.

For example, right and left-direction scroll functions may also be allocated to the horizontal ridge-shaped protrusion portion 212, and upward and downward page conversion functions may also be allocated to the vertical ridge-shaped protrusion portion 211.

Thus, when the horizontal ridge-shaped protrusion portion 212 is touched, a guidance GUI indicating that scroll manipulation of the user is possible in a right or left direction may be displayed, and when the vertical ridge-shaped protrusion portion 211 is touched, a guidance GUI indicating that page conversion is possible in an upward or downward direction may be displayed.

That is, any features may be applied to the technical features of one or more exemplary embodiments as long as a GUI for guiding a control function allocated to a touched protrusion portion is displayed according to touch of the protrusion portion when the display apparatus 100 is controlled according to manipulation of the protrusion portion formed on the touch pad 210 of the remote controller 200. Although the portions have been described as protrusion portions, this is merely exemplary, and portions of the touch screen may not protrude.

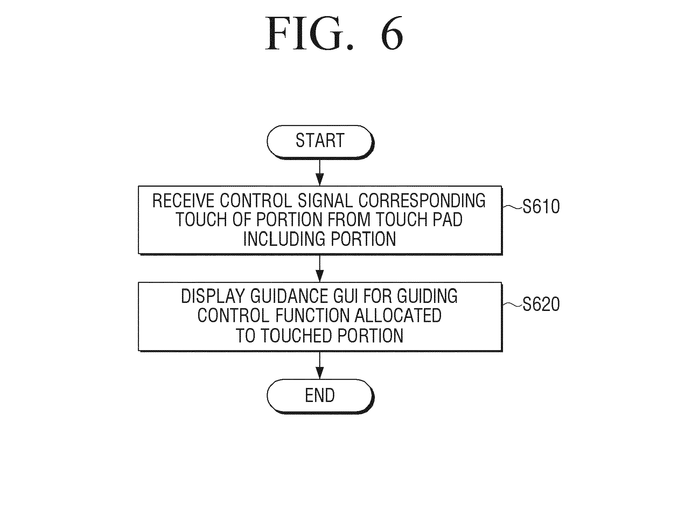

FIG. 6 is a flowchart of a method of controlling a display apparatus according to an exemplary embodiment.

Referring to FIG. 6, when a control signal corresponding to touch of a portion is transmitted to the display apparatus 100 from a touch pad , the controller 120 of the display apparatus 100 controls the receiver 130 to receive the control signal corresponding to the transmitted touch of the portion (S610). As a non-limiting example, the portion may be a protruding portion, formed on the touch pad. Further, a non-limiting example, the touch pad may be included in a remote controller and the control signal may be a remote control signal.

Then, the controller 120 controls the display 110 to display a guidance GUI for guiding a control function for the display apparatus 100, which is allocated to the touched portion (S620).

In various exemplary embodiments in which a guidance GUI for guiding a control function allocated to a touched protrusion portion is displayed according to a touch of a protrusion portion of a remote controller, a method for controlling the display apparatus 100 by the controller 120 has been already described in detail, and a repeated description thereof is omitted.

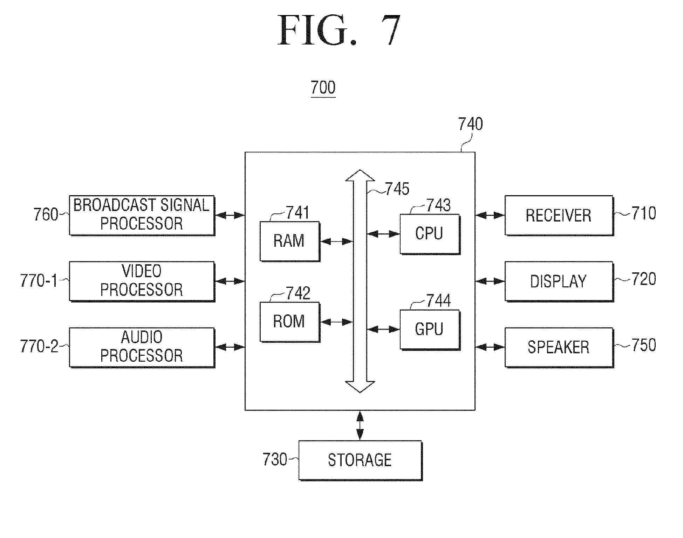

FIG. 7 is a block diagram illustrating the structure of a display apparatus 700 according to an exemplary embodiment. Referring to FIG. 7, the display apparatus 700 includes a receiver 710, a display 720, a storage 730, a controller 740, a speaker 750, a broadcast signal processor 760, a video processor 770-1, and an audio processor 770-2.

The receiver 710 receives a remote control signal received from an external remote controller 200 and transmits the remote control signal to the controller 740. In this case, the remote control signal is any signal received from the remote controller 200 and includes a remote control signal corresponding to touch of the protrusion portions 211 to 215 formed on the touch pad 210 of the remote controller. Although the receiver is described as receiving a remote control signal from an external remote controller, this is merely exemplary. For example, the receiver may receive a control signal from a connected external controller, or from a user interface (not shown) included in the display apparatus 700.

Thus, when a user touches the protrusion portions 211 to 215 of the remote controller 200, the remote controller 200 transmits a remote control signal corresponding to user touch of a protrusion portion to the receiver 710 of the display apparatus 700, and the receiver 710 transmits the received remote control signal corresponding to the protrusion portion to the controller 740.

The display 720 displays various images. In particular, the display 720 may display a guidance GUI for guiding a control function for the display apparatus 700, which is allocated to a touched protrusion portion according to control of the controller 740.

To this end, the display 720 may be embodied as various types of displays such as a liquid crystal display (LCD), an organic light emitting diode (OLED), a plasma display panel (PDP), etc. In addition, the display 720 may also include a driving circuit (not shown), a backlight unit (not shown), etc. which are embodied in types of a-Si thin film transistor (TFT), a low temperature poly silicon (LTPS) TFT, an organic TFT (OTFT), etc.

The storage 730 is an element for storing various program and data required for an operation of the display apparatus 700. In particular, according to touch of the protrusion portions 211 to 215 formed on the touch pad 210 of the remote controller, the storage 730 may store various programs and data for generating and displaying a guidance GUI for guiding the control function allocated to the touched protrusion portion.

For example, the storage 730 may store information about various remote control signals, mapping information about control functions allocated to the protrusion portions 211 to 215, various programs and data for configuration and display of a guidance GUI for a control function allocated to a protrusion portion, and various programs and data for execution of a control function allocated to a protrusion portion.

Thus, upon reception of a remote control signal corresponding to user touch of a protrusion portion, the controller 740 may read associated information from the storage 730 and generate and display a guidance GUI for guiding a control function corresponding to the touched protrusion portion.

The broadcast signal processor 760 is an element that receives a broadcast signal, processes the received broadcast signal, and converts the broadcast signal into video data, audio data, and other data. Upon reception of the broadcast signal, the broadcast signal processor 760 performs signal processing such as demodulation, equalization, demultiplexing, deinterleaving, decoding, etc. on the broadcast signal to generate video data and audio data. The generated video data is provided to the video processor 770-1 and the generated audio data is provided to the audio processor 770-2.

The video processor 770-1 is an element for processing the video data. That is, the video processor 770-1 may perform various image processes such as decoding, scaling, noise filtering, frame rate conversion, resolution conversion, etc. on the video data to generate a video frame. The generated video frame may be displayed on the display 720.

The audio processor 770-2 is an element for processing the audio data. The audio processor 770-2 may perform various processes such as decoding, amplification, noise filtering, etc. on the audio data to generate an audio signal. The generated audio signal may be converted into voice or other sounds and may be output through the speaker 750.

The controller 740 controls an overall operation of the display apparatus 700 using the various programs and data stored in the storage 730. The controller 740 includes a random access memory (RAM) 741, a read only memory (ROM) 742, a central processing unit (CPU) 743, a graphics processing unit (GPU) 744, and a bus 745. The RAM 741, the ROM 742, the CPU 743, the GPU 744, etc. may be connected to each other through the bus 745.

The CPU 743 accesses the storage 730 and boots the display apparatus 700 using an operating system (O/S) stored in the storage 730. In addition, the CPU 743 performs various operations using the various programs and data stored in the storage 730. In particular, the CPU 743 may determine the remote control signal received through the receiver 710 and control the display apparatus 700 to execute a function corresponding to the remote control signal.

The ROM 742 stores a command set and the like for system booting. When a turn-on command is input and power is supplied, the CPU 743 copies the O/S stored in the storage 730 to the RAM 741 according to the command stored in the ROM 742 and executes the O/S to boot the display apparatus 700. When booting is completed, the CPU 743 copies various programs stored in the storage 730 to the RAM 741 and executes the programs copied to the RAM 741 to perform various operations.

When booting of the display apparatus 700 is completed, the GPU 744 displays an image. In detail, the GPU 744 may generate an image including various objects such as an icon, an image, a text, etc. using a calculator (not shown) and a renderer (not shown).

The calculator (not shown) calculates an attribute value such as a coordinate value, a shape, a size, color, etc. for displaying each object according to image layout. The renderer (not shown) generates an image with various layouts, containing an object, based on the calculated attribute value. The image generated by the renderer (not shown) is provided to the display 720 and displayed in a display region.

Thus, the controller 740 may generate a guidance GUI for guiding a control function allocated to a touched protrusion portion and display the guidance GUI on the display 720, based on a remote control signal corresponding to touch of the protrusion portions 211 to 215 formed on the touch pad 210 of the remote controller 200.

The aforementioned operation of the controller 120 for the display apparatus 100 according to various exemplary embodiments may be stored in a non-transitory readable medium. The non-transitory readable medium may be installed and used in various devices.

For example, a program code for execution of a method of controlling a display apparatus, including receiving a remote control signal corresponding to touch of a protrusion portion from a remote controller including a touch pad and a protrusion portion formed thereon, and displaying a guidance GUI for guiding a control function allocated to the touched protrusion portion may be stored in a non-transitory computer readable medium and may be provided.

The non-transitory computer readable medium is a medium that semi-permanently stores data and from which data is readable by a device, but not a medium that stores data for a short time, such as register, a cache, a memory, and the like. In detail, the aforementioned various applications or programs may be stored in the non-transitory computer readable medium, for example, a compact disc (CD), a digital versatile disc (DVD), a hard disc, a Blu-ray disc, a universal serial bus (USB), a memory card, a read only memory (ROM), and the like, and may be provided.

The foregoing exemplary embodiments and advantages are merely exemplary and are not to be construed as limiting the present invention. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A display apparatus comprising:
a display;
a receiver configured to receive a remote control signal from a remote controller comprising a touch pad and a protrusion portion formed thereon; and
a controller configured to control the display to display at least one guidance graphic user interface (GUI) configured to guide a control function allocated to the protrusion portion in response to receiving the remote control signal,
wherein the remote control signal corresponds to a touch of the protrusion portion.

2. The display apparatus as claimed in claim 1, wherein the controller is further configured to control the display to display the at least one guidance GUI in a display region positioned in a position corresponding to the touched protrusion portion on the touch pad.

3. The display apparatus as claimed in claim 1 or 2, wherein:
the protrusion portion comprises a first protrusion portion that is ridge-shaped in a horizontal direction formed on the touch pad; and
the controller is further configured to control the display to display a first guidance GUI, from among the at least one guidance GUI, configured to guide a page conversion function which converts an image displayed on the display into a different image on a page basis according to a user manipulation of the first protrusion portion in response to the first protrusion portion being touched.

4. The display apparatus as claimed in claim 3, wherein:
the protrusion portion further comprises a second protrusion portion that is ridge-shaped in a vertical direction formed on the touch pad; and
the controller is further configured to control the display to display a second guidance GUI, from among the at least one guidance GUI, configured to guide a scroll function which scrolls an image displayed on the display according to a user manipulation of the second protrusion portion in response to the second protrusion portion being touched.

5. The display apparatus as claimed in claim 4, wherein the controller is further configured to control the display to remove the first or the second guidance GUIs in response to the touch of the first protrusion portion or the second protrusion portion being released, respectively, or the user manipulation of the first protrusion portion or the second protrusion portion being input, respectively.

6. The display apparatus as claimed in any one of claims 1 to 5, wherein:
the protrusion portion comprises a button-shaped protrusion; and
the controller is further configured to control the display to display a third guidance GUI, from among the at least on guidance GUI, configured to guide a display of a control GUI which controls an additional function provided by the display apparatus in response to the protrusion portion being touched.

7. The display apparatus as claimed in claim 6, wherein the controller is further configured to control the display to display the control GUI in response to the protrusion portion being retouched while the third guidance GUI is displayed.

8. A method for controlling a display apparatus, the method comprising:
receiving a remote control signal corresponding to a touch of a protrusion portion from a remote controller comprising a touch pad and the protrusion portion formed thereon; and
displaying at least one guidance graphic user interface (GUI) for guiding a control function allocated to the touched protrusion portion.

9. The method as claimed in claim 8, wherein the displaying comprises displaying the guidance GUI in a display region positioned in a position corresponding to the touched protrusion portion on the touch pad.

10. The method as claimed in claim 8 or 9, wherein:
the protrusion portion comprises a first protrusion portion that is ridge-shaped in a horizontal direction formed on the touch pad; and
the displaying comprises displaying a first guidance GUI, from among the at least one guidance GUI, for guiding a page conversion function for converting an image displayed on a display into a different image on a page basis according to a user manipulation of the first protrusion portion in response to the first protrusion portion being touched.

11. The method as claimed in claim 10, wherein:
the protrusion portion further comprises a second protrusion portion that is ridge-shaped in a vertical direction formed on the touch pad; and
the displaying comprises displaying a second guidance GUI, from among the at least one guidance GUI, for guiding a scroll function for scrolling an image displayed on the display according to a user manipulation of the second protrusion portion in response to the second protrusion portion being touched.

12. The method as claimed in claim 11, further comprising:
removing the first or the second guidance GUIs in response to the touch of the first protrusion portion or the second protrusion portion being released, respectively, or the user manipulation of the first protrusion portion or the second protrusion portion being input, respectively.

13. The method as claimed in any one of claims 8 to 12, wherein:
the protrusion portion comprises a button-shaped protrusion; and
the displaying comprises displaying a third guidance GUI, from among the at least one guidance GUI, for guiding a control GUI for controlling an additional function provided by the display apparatus in response to the protrusion portion being touched.

14. The method as claimed in claim 13, further comprising:
displaying the control GUI in response to the protrusion portion being retouched while the third guidance GUI is displayed.
